# EUROPEAN PATENT APPLICATION

(11) **EP 4 848 040 A1**
(43) Date of publication of application: **02.12.2026**
(21) Application number: 26179870.6
(22) Date of filing: 20.05.2026
(51) Int. Cl.: G06F 3/01, H04N 21/81

(54) **VIDEO DISPLAY METHOD AND APPARATUS, ELECTRONIC DEVICE, AND STORAGE MEDIUM**

(30) Priority: 26.05.2025 CN 202510686169
(71) Applicant: Beijing Zitiao Network Technology Co., Ltd., Beijing 100190 (CN)
(72) Inventor: Song, Wenju, Beijing, 100028 (CN); Pang, Na, Beijing, 100028 (CN); Zhang, Yuechuan, Beijing, 100028 (CN)
(74) Representative: Grünecker Patent- und Rechtsanwälte PartG mbB

(57) **Abstract**

The present disclosure relates to a video display method and apparatus, an electronic device, and a storage medium. The video display method is applicable to a head-mounted display device, and the video display method includes: determining a first size of a target spatial video based on an extended reality environment in which a user is currently located, in response to an instruction to display the target spatial video; determining a second size of a video playback window based on the first size of the target spatial video; displaying the video playback window in the extended reality environment at the second size; and displaying the target spatial video in the video playback window at the first size. The method may make a depth perception presented by a spatial video image and the video playback window consistent with a depth perception provided by the extended reality environment in which the user is located, thereby enhancing an immersive experience of the user.

## Description

### TECHNICAL FIELD

The present disclosure relates to the technical field of head-mounted display devices, and in particular, to a video display method and apparatus, an electronic device, and a storage medium.

### BACKGROUND

A spatial video is a video in which depth and disparity information is collected and encoded by using a plurality of cameras and which is packaged in a specific format, and a stereoscopic effect may be presented on a head-mounted display device.

In the related art, a head-mounted display device may usually create different extended reality environments by using environment images. The extended reality environment may be, for example, a dark environment, a cinema environment, a summer beach camping environment, or a warm room in winter. Different extended reality environments create different spatial depth perceptions, which may bring different visual and sensory experiences to users. When a spatial video is played, how to combine display of the spatial video with the extended reality environment in which a user is located, so as to provide an immersive viewing experience for the user, is an urgent problem that needs to be solved.

### SUMMARY

In order to solve the above technical problems or at least partially solve the above technical problems, the present disclosure provides a video display method and apparatus, an electronic device, and a storage medium.

In a first aspect, the present disclosure provides a video display method, where the video display method is applicable to a head-mounted display device, and the video display method includes:
determining a first size of a target spatial video based on an extended reality environment in which a user is currently located, in response to an instruction to display the target spatial video;
determining a second size of a video playback window based on the first size of the target spatial video;
displaying the video playback window in the extended reality environment at the second size; and
displaying the target spatial video in the video playback window at the first size.

In a second aspect, the present disclosure further provides a video display apparatus, where the video display apparatus is applicable to a head-mounted display device, and the video display apparatus includes:
a video size determination module configured to determine a first size of a target spatial video based on an extended reality environment in which a user is currently located, in response to an instruction to display the target spatial video;
a window size determination module configured to determine a second size of a video playback window based on the first size of the target spatial video; and
a display module configured to: display the video playback window in the extended reality environment at the second size; and display the target spatial video in the video playback window at the first size.

In a third aspect, the present disclosure further provides an electronic device. The electronic device includes:
one or more processors; and
a storage apparatus configured to store one or more programs, where
the one or more programs, when executed by the one or more processors, cause the one or more processors to implement the video display method as described above.

In a fourth aspect, the present disclosure further provides a computer-readable storage medium having a computer program stored thereon, where the program, when executed by a processor, implements the video display method as described above.

Compared with the prior art, the technical solutions provided by embodiments of the present disclosure have the following advantages.

According to the technical solutions provided by the embodiments of the present disclosure, a first size of a target spatial video is determined based on an extended reality environment in which a user is currently located, in response to an instruction to display the target spatial video. In the extended reality environment, the user is located at an optimal viewing point of the target spatial video when the target spatial video is displayed at the first size. A second size of a video playback window is determined based on the first size of the target spatial video. The video playback window is displayed in the extended reality environment at the second size. The target spatial video is displayed in the video playback window at the first size. The essence is that when the target spatial video is displayed, the first size of the target spatial video and the second size of the video playback window that are adapted to the extended reality environment in which the user is located are determined by combining features of the extended reality environment. In this way, it is ensured that a depth perception presented by a spatial video image and the video playback window is consistent with a depth perception provided by the extended reality environment in which the user is located, so as to effectively combine display of the spatial video with the extended reality environment in which the user is located, thereby enhancing the viewing immersion of the user.

### BRIEF DESCRIPTION OF THE DRAWINGS

The drawings herein, which are incorporated in this description and constitute a part thereof, illustrate embodiments consistent with the present disclosure and, together with the description, serve to explain the principles of the present disclosure.

In order to more clearly describe the technical solutions in the embodiments of the present disclosure or in the prior art, the following briefly introduces the drawings required for describing the embodiments or the prior art. Apparently, those of ordinary skill in the art may still derive other drawings from these drawings without creative efforts.
Fig. 1 is a flowchart of a video display method according to an embodiment of the present disclosure;
Fig. 2 is a schematic diagram of determining a first size of a target spatial video according to an embodiment of the present disclosure;
Fig. 3 is a schematic diagram of determining an image transition region according to an embodiment of the present disclosure;
Fig. 4 is a schematic diagram of a structure of a video display apparatus according to an embodiment of the present disclosure; and
Fig. 5 is a schematic diagram of a structure of an electronic device according to an embodiment of the present disclosure.

### DETAILED DESCRIPTION OF EMBODIMENTS

In order to understand the above objectives, features, and advantages of the present disclosure more clearly, the solutions of the present disclosure will be further described below. It should be noted that the embodiments of the present disclosure and the features in the embodiments may be combined with each other without conflict.

Many specific details are set forth in the following description to facilitate a full understanding of the present disclosure, but the present disclosure may also be implemented in other ways different from those described herein. Apparently, the described embodiments are part of the embodiments of the present disclosure, but not all of the embodiments.

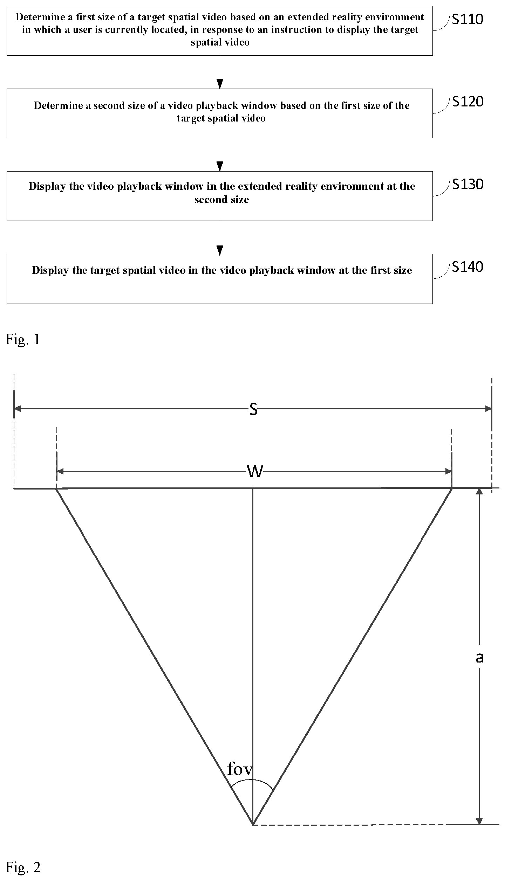

Fig. 1 is a flowchart of a video display method according to an embodiment of the present disclosure. The embodiment may be applied to the case of playing a spatial video. The method may be performed by a video display apparatus, and the apparatus may be implemented in the form of software and/or hardware and may be configured in a head-mounted display device. The head-mounted display device is a device that may achieve visual and other forms of perception. The form of the head-mounted display device may be, for example, glasses, a helmet-mounted display, or contact lenses. Certainly, the form of the head-mounted display device is not limited thereto, and the head-mounted display device may be further miniaturized or enlarged as needed. In some application scenarios, the head-mounted display device may be externally connected to a PC or other electronic device, and the external PC or other electronic device performs related calculations of the technical solutions provided in the present application and outputs data. Alternatively, the head-mounted display device itself is designed as an all-in-one machine, and the head-mounted display device itself has a display function and performs related calculations and outputs data of the technical solutions of the present application. Optionally, the head-mounted display device may be an extended reality device.

As shown in Fig. 1, the method may specifically include the following steps.

S110: Determine a first size of a target spatial video based on an extended reality environment in which a user is currently located, in response to an instruction to display the target spatial video.

A spatial video is a video in which multi-channel video data of the same scene is collected by using a plurality of cameras with different focal lengths, multi-layer video encoding is performed on the data (including determining disparity information, distinguishing a primary view from a secondary view, and encoding the primary view and the secondary view separately), and then multi-layer encoding data and a preset spatial video identification are packaged into a file in a specific format. Such a video includes not only plane image information, but also a spatial position and a stereoscopic effect of an object by presenting disparity information and a depth value, so that a terminal device (such as a head-mounted display device) supporting display of the format may decode and generate a spatial video with a real stereoscopic effect and immersive experience. In some scenes, the spatial video may be encoded using the MV-HEVC (Multi-View High Efficiency Video Coding) standard.

The target spatial video may be, for example, a spatial video that needs to be played currently. In practice, the target spatial video may be specified by the user, for example.

The instruction to display the target spatial video may be, for example, an instruction indicating that the user desires to play the target spatial video. The instruction to display the target spatial video may be generated at the following time: it is detected that the user performs a specific operation on the head-mounted display device, or it is detected that the user performs a specific operation on a controller connected to the head-mounted display device, or it is detected that the user completes a specific action, or a specific voice instruction is detected.

The first size of the target spatial video may be, for example, size data that needs to be used when a target spatial video image is displayed in the extended reality environment in which the user is currently located. It should be noted that the first size of the target spatial video is data determined based on the extended reality environment in which the user is currently located, and is data adapted to the extended reality environment in which the user is currently located. In other words, when the user is in different extended reality environments, the obtained first sizes of the target spatial video are also different. Optionally, the first size of the target spatial video includes at least one of the following: a viewing distance, a size of the target spatial video image in a width direction, and a size of the target spatial video image in a height direction. The viewing distance refers to a distance from a plane in which the target spatial video image is located to a viewing position of the user.

The extended reality environment may be, for example, a virtual scene environment created by using an environment image when the extended reality device is running. The virtual scene environment may be an emulation environment of the real world, a semi-emulation and semi-fictitious virtual scene environment, or a pure fictitious virtual scene environment. The extended reality environment may be, for example, a dark environment, a cinema environment, a summer beach camping environment, or a warm room in winter. Different extended reality environments may include different environmental elements. For example, the summer beach camping environment includes an ocean, a beach, a reef, a tent, a campfire, and the like.

Different extended reality environments create differences in spatial depth perception (that is, a three-dimensional spatial depth perception perceived by the user). Such spatial depth perception may make the user have an immersive experience. The spatial depth perception in the extended reality environment is created by "placing" the environmental elements in the extended reality environment in appropriate positions, so that the user perceives that the environmental elements keep appropriate distances from the user. When the spatial video is played, in order to maintain the immersion of the user, it is necessary to place the target spatial video image and the video playback window in the extended reality environment at appropriate positions away from the user, and display them in appropriate sizes, thereby ensuring that the user may see details in the target spatial video image.

In some scenes, in the extended reality environment, the user is located at an optimal viewing point of the target spatial video when the target spatial video is displayed at the first size. The optimal viewing point of the video may be, for example, a position that may allow the audience to obtain the best visual experience and immersion when the video is watched. "In the extended reality environment, the user is located at the optimal viewing point of the target spatial video when the target spatial video is displayed at the first size" may be, for example, that in the extended reality environment in which the user is currently located, compared with displaying the target spatial video in other sizes, displaying the target spatial video in the first size provides the best spatial video viewing effect for the audience.

There are a plurality of methods for implementing "determining the first size of the target spatial video based on the extended reality environment in which the user is currently located", which is not limited in the present application. Exemplarily, the method for implementing "determining the first size of the target spatial video based on the extended reality environment in which the user is currently located" may include: determining a viewing distance based on the extended reality environment in which the user is currently located; determining a size of a target spatial video image in a width direction and a size of the target spatial video image in a height direction based on the viewing distance; and using the viewing distance, the size of the target spatial video image in the width direction, and the size of the target spatial video image in the height direction as the first size of the target spatial video.

In some scenes, a correspondence between an extended reality environment and a viewing distance may be pre-established, and "determining the viewing distance based on the extended reality environment in which the user is currently located" includes: determining, based on the preset correspondence, the viewing distance corresponding to the extended reality environment in which the user is currently located.

There are a plurality of specific methods for implementing "determining the size of the target spatial video image in the width direction and the size of the target spatial video image in the height direction based on the viewing distance", which is not limited in the present application. Exemplarily, "determining the size of the target spatial video image in the width direction and the size of the target spatial video image in the height direction based on the viewing distance" includes: determining a field of view and an aspect ratio of the target spatial video based on metadata of the target spatial video; and determining the size of the target spatial video image in the width direction and the size of the target spatial video image in the height direction based on the viewing distance, and the field of view and the aspect ratio of the target spatial video.

The metadata of the spatial video refers to data that describes the spatial video, and is additional data related to spatial video content, which may include one or more of an original size, an aspect ratio, and a field of view of the spatial video. The original size of the spatial video may be, for example, an image height and an image width that are determined based on recording parameters used during recording in the recording process. The aspect ratio of the target spatial video may be, for example, a ratio of a width to a height of the target spatial video image. The aspect ratio of the target spatial video may be directly recorded in the metadata of the spatial video, or may not be recorded in the metadata of the spatial video. When the aspect ratio of the target spatial video is not recorded in the metadata of the spatial video, it may be obtained based on the original size of the spatial video.

"Determining the size of the target spatial video image in the width direction and the size of the target spatial video image in the height direction based on the viewing distance, and the field of view and the aspect ratio of the target spatial video" may include: determining the size of the target spatial video image in the width direction based on the viewing distance and the field of view of the target spatial video; and determining the size of the target spatial video image in the height direction based on the size of the target spatial video image in the width direction and the aspect ratio of the target spatial video.

Exemplarily, referring to Fig. 2, if the viewing distance is a, the field of view of the target spatial video is fov, and the aspect ratio of the target spatial video is r, the size W of the image of the target spatial video in the width direction may be obtained based on formula (1):
$W = 2 a ⋅ tan \left(\frac{fov}{2}\right)$ (1)

The size H of the image of the target spatial video in the height direction may be obtained based on formula (2):
$H = \frac{W}{r}$ (2)

It should be noted that when the user is in any extended reality environment, when different spatial videos are played by using the technical solution provided in the present application, due to differences in the fields of view and/or aspect ratios of the different spatial videos, first size parameters determined for the spatial videos are also different. For example, the viewing distances in the first sizes determined for the different spatial videos are the same, but the sizes of the spatial video images in the width direction and the sizes of the spatial video images in the height direction are different.

S 120: Determine a second size of a video playback window based on the first size of the target spatial video.

The video playback window may be, for example, an area used for playing a spatial video in the extended reality environment. In practice, the video playback window may be, for example, an area in a control panel used for playing the spatial video.

The second size of the video playback window may be, for example, an adapted size calculated based on the first size of the target spatial video, and the size may allow the target spatial video to be completely displayed in the video playback window at the first size. In other words, when the target spatial video is displayed at the first size, the image of the target spatial video is completely located in the video playback window, instead of the video playback window only displaying a partial area of the image of the target spatial video. Optionally, the second size of the video playback window includes at least one of the following: a distance from the video playback window to the user, a size of the video playback window in the width direction, and a size of the video playback window in the height direction.

There are a plurality of methods for implementing this step, which is not limited in the present application. Exemplarily, the method for implementing this step may include: determining a size of the video playback window in the width direction and a size of the video playback window in the height direction based on the size of the target spatial video image in the width direction and the size of the target spatial video image in the height direction, and a preset coverage of an image to a window; determining the distance from the video playback window to the user based on the viewing distance of the target spatial video, where the distance from the video playback window to the user is equal to the viewing distance; and using the distance from the video playback window to the user, the size of the video playback window in the width direction, and the size of the video playback window in the height direction as the second size of the video playback window.

The coverage of the image to the window may be, for example, a preset specific numerical value or a preset numerical range, and it means a ratio of an area of the spatial video image to an area of the video playback window when the spatial video image is displayed in the video playback window. The present application does not limit which numerical value or numerical range the coverage of the image to the window specifically refers to. In practice, optionally, it may be set as required by the user. Optionally, the coverage of the image to the window is a numerical value less than or equal to 1.

The size of the video playback window in the width direction and the size of the video playback window in the height direction are determined based on the size of the target spatial video image in the width direction and the size of the target spatial video image in the height direction, and the preset coverage of the image to the window, so that it may be ensured that the size of the video playback window is appropriate and the image of the target spatial video may be completely displayed.

S130: Display the video playback window in the extended reality environment at the second size.

S140: Display the target spatial video in the video playback window at the first size.

According to the above technical solution, the first size of the target spatial video is determined based on the extended reality environment in which the user is currently located, in response to the instruction to display the target spatial video. In the extended reality environment, the user is located at the optimal viewing point of the target spatial video when the target spatial video is displayed at the first size. The second size of the video playback window is determined based on the first size of the target spatial video. The video playback window is displayed in the extended reality environment at the second size. The target spatial video is displayed in the video playback window at the first size. The essence is that when the target spatial video is displayed, the first size of the target spatial video and the second size of the video playback window that are adapted to the extended reality environment in which the user is located are determined by combining the features of the extended reality environment. In this way, it may be ensured that the depth perception presented by the spatial video image and the video playback window is consistent with the depth perception provided by the extended reality environment in which the user is located, so as to effectively combine the display of the spatial video with the extended reality environment in which the user is located, thereby enhancing the viewing immersion of the user.

In addition, when the first size of the target spatial video and the second size of the video playback window that are adapted to the extended reality environment in which the user is located are determined by using the technical solution of the present application, the field of view and the aspect ratio of the target spatial video are considered. This method ensures that when the target spatial video is played, the image size is not only suitable for the spatial depth perception of the current extended reality environment, but also ensures that the user may clearly observe the details in the video image.

Based on the preceding technical solutions, optionally, the method may further include: determining an image transition area in the video playback window, where the image transition area is adjacent to an edge of the video playback window and is configured to connect the image of the target spatial video and the extended reality environment; and performing feathering processing on the image transition area.

The image transition area may be, for example, an area that is in the video playback window and adjacent to the edge of the video playback window and that is enclosed by two rectangles whose centers coincide.

The feathering processing is performed on the image transition area, so that the image of the target spatial video may be distinguished from the environment image used for creating the extended reality environment, and then the image of the target spatial video is highlighted, thereby facilitating the user to focus on the content presented by the image of the target spatial video and reducing visual interference.

In addition, in some scenes, in the process of playing the target spatial video image, the target spatial video image close to the edge of the video playback window may be distorted. The image transition area is configured to coincide with the distorted area in the target spatial video image, and the feathering processing is performed on the image transition area, so that the distorted image may be occluded.

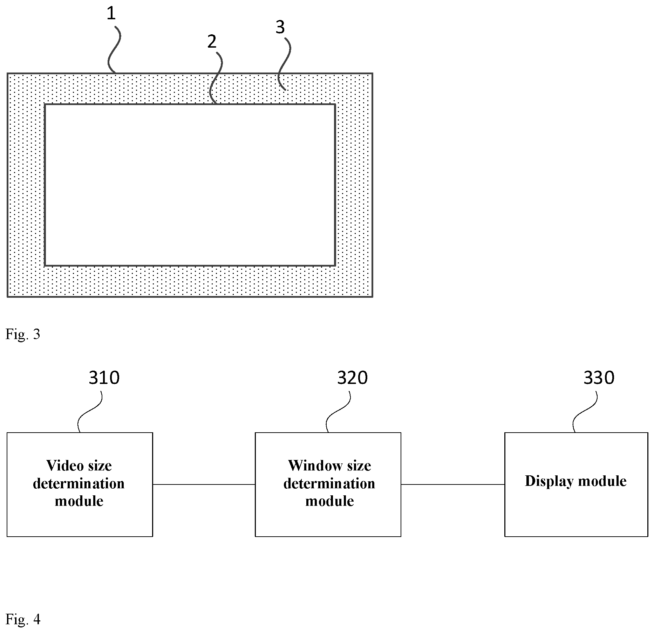

Optionally, determining the image transition area in the video playback window may include: using an area in the video playback window that is not filled with the image of the target spatial video as the image transition area. Exemplarily, referring to Fig. 3, it is assumed that a rectangular box 1 represents the edge of the video playback window, a rectangular box 2 represents the edge of the target spatial video image, and an image transition area 3 (that is, the dotted area in the figure) is an area enclosed by the rectangular box 1 and the rectangular box 2.

Optionally, determining the image transition area in the video playback window may further include: extending a preset size toward an interior of the video playback window based on the edge of the video playback window, and using the obtained area as the image transition area. Exemplarily, referring to Fig. 3, it is assumed that a rectangular box 1 represents the edge of the video playback window, a rectangular box 2 represents a rectangular box obtained by extending a preset size toward the interior of the video playback window based on the edge of the video playback window, and an image transition area 3 (that is, the dotted area in the figure) is an area enclosed by the rectangular box 1 and the rectangular box 2.

The feathering processing performed on the image transition area may be, for example, displaying an image with a specific texture in the image transition area, or blurring the image displayed in the image transition area.

It should be noted that for the foregoing method embodiments, for ease of description, they are all expressed as a series of action combinations, but those skilled in the art should know that the present application is not limited by the described action order, because according to the present application, certain steps may be performed in other order or simultaneously. Secondly, those skilled in the art should also know that the embodiments described in the description all belong to preferred embodiments, and the actions and modules involved are not necessarily required in the present application.

Fig. 4 is a schematic diagram of a structure of a video display apparatus according to an embodiment of the present disclosure. The video display apparatus provided by the embodiment of the present disclosure is applicable to a head-mounted display device. Referring to Fig. 4, the video display apparatus specifically includes:
a video size determination module 310 configured to determine a first size of a target spatial video based on an extended reality environment in which a user is currently located, in response to an instruction to display the target spatial video;
a window size determination module 320 configured to determine a second size of a video playback window based on the first size of the target spatial video; and
a display module 330 configured to: display the video playback window in the extended reality environment at the second size; and display the target spatial video in the video playback window at the first size.

Further, the video size determination module 310 is configured to:
determine a viewing distance based on the extended reality environment in which the user is currently located;
determine a size of a target spatial video image in a width direction and a size of the target spatial video image in a height direction based on the viewing distance; and
use the viewing distance, the size of the target spatial video image in the width direction, and the size of the target spatial video image in the height direction as the first size of the target spatial video.

Further, the video size determination module 310 is configured to:
determine a field of view and an aspect ratio of the target spatial video based on metadata of the target spatial video; and
determine the size of the target spatial video image in the width direction and the size of the target spatial video image in the height direction based on the viewing distance, and the field of view and the aspect ratio of the target spatial video.

Further, the video size determination module 310 is configured to:
determine the size of the target spatial video image in the width direction based on the viewing distance and a field of view of the target spatial video; and
determine the size of the target spatial video image in the height direction based on the size of the target spatial video image in the width direction and an aspect ratio of the target spatial video.

Further, the window size determination module 320 is configured to:
determine a size of the video playback window in the width direction and a size of the video playback window in the height direction based on the size of the target spatial video image in the width direction and the size of the target spatial video image in the height direction, and a preset coverage of an image to a window;
determine a distance from the video playback window to the user based on the viewing distance of the target spatial video, where the distance from the video playback window to the user is equal to the viewing distance; and
use the distance from the video playback window to the user, the size of the video playback window in the width direction, and the size of the video playback window in the height direction as the second size of the video playback window.

Further, the apparatus further includes a transition module configured to:
determine an image transition area in the video playback window, where the image transition area is adjacent to an edge of the video playback window and is configured to connect the image of the target spatial video and the extended reality environment; and
perform feathering processing on the image transition area.

Further, the transition module is configured to:
use an area in the video playback window that is not filled with the image of the target spatial video as the image transition area; or
extend a preset size toward an interior of the video playback window based on the edge of the video playback window, and use an obtained area as the image transition area.

The video display apparatus provided by the embodiment of the present disclosure may perform the steps in the video display method provided by the method embodiment of the present disclosure, and has the steps and beneficial effects of the method, which are not described herein again.

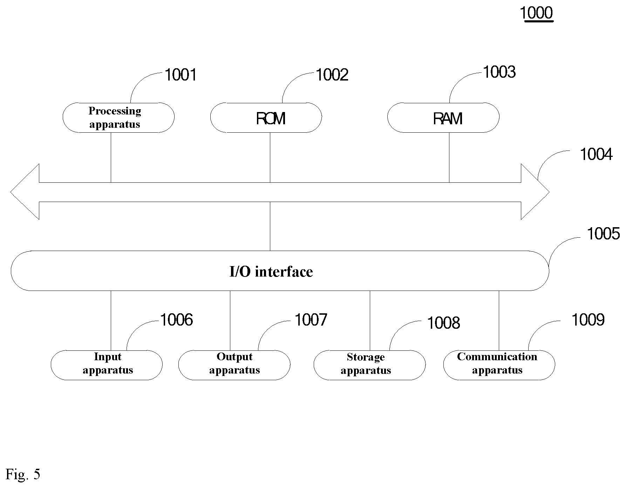

Reference is made specifically to Fig. 5 below, which shows a schematic diagram of a structure of an electronic device 1000 suitable for implementing the embodiments of the present disclosure. The electronic device 1000 in the embodiments of the present disclosure may include, but is not limited to, mobile terminals such as a mobile phone, a notebook computer, a digital broadcast receiver, a PDA (personal digital assistant), a tablet computer, a PMP (portable multimedia player), a vehicle-mounted terminal (for example, a vehicle navigation terminal), and a wearable electronic device, and fixed terminals such as a digital TV, a desktop computer, and a smart home device. The electronic device shown in Fig. 5 is merely an example, and should not impose any limitation on the functions and the range of use of the embodiments of the present disclosure.

As shown in Fig. 5, the electronic device 1000 may include a processing apparatus (e.g., a central processing unit, a graphics processor, etc.) 1001, which may perform various appropriate actions and processing based on a program stored in a read-only memory (ROM) 1002 or a program loaded from a storage apparatus 1008 into a random access memory (RAM) 1003 to implement the video display method of the embodiments as described in the present disclosure. The RAM 1003 further stores various programs and information required for operations of the electronic device 1000. The processing apparatus 1001, the ROM 1002, and the RAM 1003 are interconnected by a bus 1004. An input/output (I/O) interface 1005 is also connected to the bus 1004.

Usually, the following apparatuses may be connected to the I/O interface 1005: an input apparatus 1006 including, for example, a touch screen, a touchpad, a keyboard, a mouse, a camera, a microphone, an accelerometer, and a gyroscope; an output apparatus 1007 including, for example, a liquid crystal display (LCD), a speaker, and a vibrator; a storage apparatus 1008 including, for example, a magnetic tape and a hard disk; and a communication apparatus 1009. The communication apparatus 1009 may allow the electronic device 1000 to perform wireless or wired communication with other devices to exchange information. Although Fig. 5 shows the electronic device 1000 having various apparatuses, it should be understood that it is not required to implement or provide all of the shown apparatuses. More or fewer apparatuses may alternatively be implemented or provided.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program includes program code for performing the method shown in the flowchart, to implement the video display method as described above. In such an embodiment, the computer program may be downloaded and installed from a network through the communication apparatus 1009, or installed from the storage apparatus 1008, or installed from the ROM 1002. When the computer program is executed by the processing apparatus 1001, the preceding functions defined in the method of the embodiments of the present disclosure are executed.

It should be noted that the preceding computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that includes or stores a program, and the program may be used by or used in combination with an instruction execution system, apparatus, or device. In the present disclosure, the computer-readable signal medium may include an information signal propagated on a baseband or as a part of a carrier wave, and computer-readable program code is carried in the information signal. The propagated information signal may be in a plurality of forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code included in the computer-readable medium may be transmitted in any suitable medium, including but not limited to: a wire, an optical cable, RF (radio frequency), or any suitable combination thereof.

In some implementations, a client and a server may communicate using any known or future developed network protocol, such as HTTP (HyperText Transfer Protocol), and may be interconnected with any form or medium of digital information communication (for example, a communication network). Examples of the communication network include a local area network ("LAN"), a wide area network ("WAN"), an internet (for example, the Internet), a peer-to-peer network (for example, an Ad-Hoc network), and any network known or to be developed in the future.

The preceding computer-readable medium may be included in the preceding electronic device, or may exist alone without being assembled into the electronic device.

The preceding computer-readable medium carries one or more programs that, when executed by the electronic device, cause the electronic device to:
determine a first size of a target spatial video based on an extended reality environment in which a user is currently located, in response to an instruction to display the target spatial video, where in the extended reality environment, the user is located at an optimal viewing point of the target spatial video when the target spatial video is displayed at the first size;
determine a second size of a video playback window based on the first size of the target spatial video;
display the video playback window in the extended reality environment at the second size; and
display the target spatial video in the video playback window at the first size.

Optionally, when the one or more programs are executed by the electronic device, the electronic device may further perform the other steps described in the preceding embodiments.

The computer program code for performing the operations of the present disclosure may be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagrams may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagrams and/or the flowchart, and a combination of the blocks in the block diagrams and/or the flowchart may be implemented by a dedicated hardware-based system that executes specified functions or operations, or may be implemented by a combination of dedicated hardware and computer instructions.

The units involved in the embodiments of the present disclosure may be implemented in a software manner, and may also be implemented in a hardware manner. The name of a unit does not constitute a limitation on the unit itself under certain circumstances.

The functions described above herein may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, the present disclosure provides an electronic device, including:
one or more processors; and
a memory configured to store one or more programs, where
the one or more programs, when executed by the one or more processors, cause the one or more processors to implement the video display method according to any one of the embodiments provided in the present disclosure.

According to one or more embodiments of the present disclosure, the present disclosure provides a computer-readable storage medium having a computer program stored thereon, where the program, when executed by a processor, implements the video display method according to any one of the embodiments provided in the present disclosure.

An embodiment of the present disclosure further provides a computer program product, which includes a computer program or instruction, where the computer program or instruction, when executed by a processor, implements the video display method as described above.

It should be noted that in this paper, relational terms such as "first" and "second" are only used to distinguish one entity or operation from another entity or operation, and do not necessarily require or imply any actual relationship or order between these entities or operations. Moreover, the terms "include", "comprise", or any other variation thereof are intended to cover non-exclusive inclusion, so that a process, method, object, or device including a series of elements includes not only those elements, but also other elements not explicitly listed or elements inherent to such process, method, object, or device. Without further restrictions, an element defined by the phrase "includes a..." does not exclude the existence of additional identical elements in the process, method, object, or device that includes the element.

The above descriptions are only specific implementations of the present disclosure, so that those skilled in the art may understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments described herein, but rather to the widest scope consistent with the principles and novel features disclosed herein.

## Claims

1. A video display method, wherein the video display method is applicable to a head-mounted display device, and the video display method comprises:
determining a first size of a target spatial video based on an extended reality environment in which a user is currently located, in response to an instruction to display the target spatial video;
determining a second size of a video playback window based on the first size of the target spatial video;
displaying the video playback window in the extended reality environment at the second size; and
displaying the target spatial video in the video playback window at the first size.

2. The method of claim 1, wherein the determining the first size of the target spatial video based on the extended reality environment in which the user is currently located comprises:
determining a viewing distance based on the extended reality environment in which the user is currently located;
determining a size of a target spatial video image in a width direction and a size of the target spatial video image in a height direction based on the viewing distance; and
using the viewing distance, the size of the target spatial video image in the width direction, and the size of the target spatial video image in the height direction as the first size of the target spatial video.

3. The method of claim 2, wherein the determining the size of the target spatial video image in the width direction and the size of the target spatial video image in the height direction based on the viewing distance comprises:
determining a field of view and an aspect ratio of the target spatial video based on metadata of the target spatial video; and
determining the size of the target spatial video image in the width direction and the size of the target spatial video image in the height direction based on the viewing distance, and the field of view and the aspect ratio of the target spatial video.

4. The method of claim 3, wherein the determining the size of the target spatial video image in the width direction and the size of the target spatial video image in the height direction based on the viewing distance, and the field of view and the aspect ratio of the target spatial video comprises:
determining the size of the target spatial video image in the width direction based on the viewing distance and the field of view of the target spatial video; and
determining the size of the target spatial video image in the height direction based on the size of the target spatial video image in the width direction and the aspect ratio of the target spatial video.

5. The method of claim 4, wherein the determining the second size of the video playback window based on the first size of the target spatial video comprises:
determining a size of the video playback window in the width direction and a size of the video playback window in the height direction based on the size of the target spatial video image in the width direction and the size of the target spatial video image in the height direction, and a preset coverage of an image to a window;
determining a distance from the video playback window to the user based on the viewing distance of the target spatial video, wherein the distance from the video playback window to the user is equal to the viewing distance; and
using the distance from the video playback window to the user, the size of the video playback window in the width direction, and the size of the video playback window in the height direction as the second size of the video playback window.

6. The method of any of claims 1 to 5 further comprising:
determining an image transition area in the video playback window, wherein the image transition area is adjacent to an edge of the video playback window and is configured to connect the image of the target spatial video and the extended reality environment; and
performing feathering processing on the image transition area.

7. The method of claim 6, wherein the determining the image transition area in the video playback window comprises:
using an area in the video playback window that is not filled with the image of the target spatial video as the image transition area; or
extending a preset size toward an interior of the video playback window based on the edge of the video playback window, and using an obtained area as the image transition area.

8. A video display apparatus, wherein the video display apparatus is applicable to a head-mounted display device, and the video display apparatus comprises:
a video size determination module configured to determine a first size of a target spatial video based on an extended reality environment in which a user is currently located, in response to an instruction to display the target spatial video;
a window size determination module configured to determine a second size of a video playback window based on the first size of the target spatial video; and
a display module configured to: display the video playback window in the extended reality environment at the second size; and display the target spatial video in the video playback window at the first size.

9. An electronic device, comprisine:
one or more processors; and
a storage apparatus configured to store one or more programs, wherein
the one or more programs, when executed by the one or more processors, cause the one or more processors to implement the method of any of claims 1 to 7.

10. A computer-readable storage medium having a computer program stored thereon, wherein the program, when executed by a processor, implements the method of any of claims 1 to 7.
